# EUROPÄISCHE PATENTSCHRIFT

(11) **EP 0 634 248 B1**
(45) Veröffentlichungstag und Bekanntmachung des Hinweises auf die Patenterteilung: **13.08.1997**
(21) Anmeldenummer: 94102742.7
(22) Anmeldetag: 24.02.1994
(51) Int. Cl.: B23Q 11/00, B23Q 5/40

(54) **Werkzeugmaschine, insbesondere Langbett-Werkzeugmaschine**
Machine tool, in particular machine tool with long bed
Machine-outil, en particulier machine-outil avec banc long

(30) Priorität: 16.06.1993 DE 4319905
(43) Veröffentlichungstag der Anmeldung: 18.01.1995
(73) Patentinhaber: CHIRON-WERKE GMBH & CO. KG, 78532 Tuttlingen (DE)
(72) Erfinder: Rütschle, Eugen, D-78570 Mühlheim (DE); Haninger, Rudolf, D-78606 Seitingen (DE)
(74) Vertreter: Otten, Hajo, Dr.-Ing.

(56) Entgegenhaltungen:
- EP-A- 0 482 268
- DE-A- 2 025 786
- DE-A- 2 202 780
- DE-A- 3 445 525
- GB-A- 2 106 821
- PATENT ABSTRACTS OF JAPAN vol. 7, no. 215 (M-244) (1360) 22. September 1983 & JP-A-58 109 242 (HITACHI SEIKO) 29. Juni 1983

## Beschreibung

Die vorliegende Erfindung betrifft eine Werkzeugmaschine, insbesondere eine Langbett-Werkzeugmaschine, mit einem in zumindest einer ersten Achse verfahrbaren Ständer, mit zumindest einer im Bereich ihrer beiden äußeren Enden an Stützstellen drehbar eingespannten Spindel, die sich parallel zu der ersten Achse erstreckt und mit dem Ständer derart verbunden ist, daß der Ständer bei einer Drehung der Spindel in der ersten Achse verfahren wird, und mit einer zwischen den Stützstellen auf die Spindel wirkenden Dämpfungsvorrichtung, die etwaige Schwingungen der Spindel dämpft.

Eine derartige Werkzeugmaschine ist aus der GB-A-2 106 821 bekannt.

Insbesondere bei Langbett-Werkzeugmaschinen ist immer wieder zu beobachten, daß bei sehr großen Eilganggeschwindigkeiten oder wenn die eingespannte Länge der Spindel sehr groß ist, die Spindel dazu neigt, in unerwünschte Schwingungen zu geraten.

Diese Schwingungen begrenzen nicht nur die beherrschbare Eilganggeschwindigkeit und die Bettlänge nach oben, sie führen auch zu einer vorzeitigen Materialermüdung und ggf. zu einem Ausfall der betreffenden Werkzeumaschine. Ferner beeinträchtigen diese Schwingungen die Arbeitsgenauigkeit der Werkzeugmaschine, denn der Ständer läßt sich unter derartigen Betriebsgeschwindigkeiten nicht mehr mit hoher Geschwindigkeit über größere Strecken genau verfahren.

Es ist bekannt, daß die kritische Drehzahl, bei der Wellen anfangen zu schwingen, von der Kraglänge sowie von dem Durchmesser der Welle abhängt. Durch Reduzierung der eingespannten freien Länge oder durch Erhöhung des Durchmessers kann die kritische Drehzahl zwar erhöht werden, das fuhrt aber entweder zu einer unerwünscht hohen Masse der Spindel oder aber zu einer zu geringen Bettlänge. Insbesondere bei der Erhöhung des Durchmessers der Spindel ist noch zu bedenken, daß schon die Durchbiegung durch das Eigengewicht ausreicht, um die unerwünschte Schwingung der Spindel anzuregen. Diese Schwingungen können sich übrigens derart aufschaukeln, daß es zu einer beträchtlichen Zerstörung der Werkzeugmaschine kommt.

Bei der aus der GB-A-2 106 821 bekannten Werkzeugmaschine umfaßt die Dämpfungsvorrichtung zwei Hilfslager, die in Richtung der ersten Achse verschiebbar an dem Ständer gelagert sind, der dort Schlitten genannt wird. Die beiden Hilfslager sind beidseits der Kugelgewindemutter angeordnet und umgreifen die Spindel jeweils mit einem Lagerteil. Auf diese Weise wird die Spindel beidseits der Kugelgewindemutter noch einmal umfaßt und bedämpft.

Wenn sich der Ständer nicht im Bereich eines der beiden äußeren Enden der Spindel befindet, weisen die Hilfslager zueinander ihren maximalen Abstand auf, sie sind an den äußeren Enden des Ständers über Sperrklinken arretiert. Fährt der Ständer dagegen eines der Hilfslager gegen eines der beiden äußeren Enden der Spindel, so löst sich die jeweilige Sperrklinke, die das Hilfslager mit dem Ständer verbindet, während eine weitere Sperrklinke einrastet, die das Hilfslager mit dem jeweiligen Endlager der Spindel arretiert. Bewegt sich der Ständer wieder von dem äußeren Ende weg, sorgt die letztere Arretierung dafür, daß das Hilfslager wieder in seine Außenposition an dem Ständer gezogen wird.

Diese Konstruktion ist sehr aufwendig und birgt die Gefahr eines Verklemmens bei starken Schwingungen der Spindel, da der Ständer an drei voneinander beabstandeten Stellen an der Spindel geführt werden muß, damit die gewünschte Dämpfung erzielt wird.

Eine ähnliche Konstruktion ist aus der DE-A-34 45 525 bekannt, bei der ein zu verfahrendes Bauteil an der Mutter eines Kugelgewindetriebes befestigt ist. Im Abstand zu der Mutter weist dieses Bauteil ein Ringelement auf, das an dem Bauteil zwangsgeführt ist und derart zentrisch auf der Kugelgewindespindel sitzt, daß es Schwingungen der letzteren bedämpft.

Ausgehend davon ist es Aufgabe der vorliegenden Erfindung, eine Werkzeugmaschine der eingangs genannten Art dahingehend weiterzubilden, daß bei konstruktiv einfachem Aufbau und guter Betriebssicherheit große Eilganggeschwindigkeiten beherrscht werden können und/oder große Bettlängen bei Langbett-Werkzeugmaschinen ermöglicht werden können.

Erfindungsgemäß wird diese Aufgabe bei einer Werkzeugmaschine der eingangs genannten Art dadurch gelöst, daß die Dämpfungsvorrichtung vom Ständer unabhängig und längs der Spindel dadurch verfahrbar ist, daß sie zumindest zeitweise über zumindest einen Anschlag mit dem fahrenden Ständer in Anlage bringbar ist.

Die der Erfindung zugrundeliegende Aufgabe wird auf diese Weise vollkommen gelöst. Die Anmelderin hat nämlich festgestellt, daß der Ständer die Dämpfungsvorrichtung sozusagen bei seiner Bewegung mitschleppen kann, so daß kein extra Antrieb für die Dämpfungsvorrichtung vorzusehen ist, um diese aus dem aktuellen Verfahrbereich des Ständers weg zu bewegen. Ferner ist es auch nicht erforderlich, die Dämpfungsvorrichtung am Ständer selbst zu befestigen, so daß es hier nicht zu Verklemmungen kommen kann.

Bei dieser Maßnahme ist weiter von Vorteil, daß die Dämpfungsvorrichtung die Verfahrbarkeit des Ständers nicht beeinflußt. Bei derartigen Werkzeugmaschinen wird nämlich die Spindel häufig von einer am Ständer befestigten Mutter voll umfaßt, so daß eine zusätzliche ortsfeste Unterstützung der Spindel entweder den Verfahrweg des Ständers deutlich verringern würde oder aber so dicht an einer Stützstelle angebracht sein müßte, daß sie praktisch wirkungslos wäre.

Darüber hinaus kann die neue Dämpfungsvorrichtung auch bei bestehenden Werkzeugmaschinen nachgerüstet werden.

Weiterhin ist es bevorzugt, wenn bei einer Werkzeugmaschine, bei der die Spindel über ein an dem Ständer befestigtes Mutternteil mit dem Ständer verbunden ist, die Dämpfungsvorrichtung zu beiden Seiten des Mutternteiles auf die Spindel wirkt.

Diese Maßnahme ist insofern von Vorteil, als eine noch deutlich bessere Dämpfungswirkung erzielt wird, da z.B. zwei Abstützungen vorgesehen sind. Diese Maßnahme ist aber auch dann von Vorteil, wenn der Ständer gerade eine seiner Extrempositionen an einem der äußeren Enden der Spindel eingenommen hat, da dann nämlich immer noch zumindest eine Abstützung an der großen Kraglänge zwischen der entfernten Stützstelle und dem Mutternteil wirkt.

Dabei ist es ebenfalls bevorzugt, wenn die Dämpfungsvorrichtung zumindest ein die Spindel umfassendes Lagerteil aufweist.

Durch diese Maßnahme wird auf vorteilhafte Weise eine sehr gute Dämpfung erreicht, die erheblich besser wirkt, als eine reine zusätzliche Unterstützung oder sonstige Abstützung der Spindel. Dieses Lagerteil kann z.B. ein Kugellager mit Innenring sein, auf dem ggf. ebenfalls ein Gewinde vorgesehen sein kann, so daß das Lagerteil bei der Drehung der Spindel mitläuft.

In einer Weiterbildung ist es hier bevorzugt, wenn das Lagerteil gegenüber der Spindel axial und radial bewegbar ist.

Hier ist von Vorteil, daß die Drehung der Spindel selbst die Lage des Lagerteiles gar nicht oder nur geringfügig beeinflußt, so daß bei sehr schnellen und kurzen Bewegungen des Ständers die Dämpfungsvorrichtung quasi von ihrer Lage her unverändert bleibt.

Dabei ist es insgesamt bevorzugt, wenn die Dämpfungsvorrichtung zumindest zwei Lagerteile aufweist, die in Richtung der ersten Achse beabstandet und durch einen Abstandshalter miteinander verbunden sind.

Hier ist von Vorteil, daß für eine sehr gleichmäßige Dämpfung der Spindel bei unterschiedlichsten Betriebspositionen des Ständers gesorgt wird. Wird nämlich das erste Lagerteil von dem Ständer mitgeschleppt, so wird das zweite Lagerteil über den Abstandshalter, der z.B. die Form einer Stange aufweisen kann, ebenfalls mitgezogen. Durch eine geeignete Wahl der Länge des Abstandes zwischen den beiden Lagerteilen kann somit immer eine längs der ersten Achse gut verteilte Dämpfung erzielt werden.

Dabei ist es bevorzugt, wenn die Dämpfungsvorrichtung an einer parallel zu der Spindel verlaufenden Führungsvorrichtung in Richtung der ersten Achse verschiebbar geführt ist.

Hier ist von Vorteil, daß wegen der zusätzlichen Führung der Dämpfungsvorrichtung kein Verklemmen derselben mehr möglich ist, auch wenn die Spindel starke Querkräfte auf die Dämpfungsvorrichtung ausübt. Zwar wäre es durchaus denkbar, die Spindel dadurch zu bedämpfen, daß auf ihr zwei durch beispielsweise eine Stange beabstandete Lagerteile angeordnet sind, die nach der Art eines Parallelschlusses eine vorausgewählte Länge der Spindel überbrücken und miteinander koppeln, dies kann jedoch zu einem Verklemmen führen, das durch die zusätzliche Führung jetzt verhindert wird.

In einer Weiterbildung ist es dann bevorzugt, wenn die Dämpfungsvorrichtung derart an der Führungsvorrichtung geführt ist, daß durch die Spindel auf die Dämpfungsvorrichtung ausgeübte, im wesentlichen quer zu der ersten Achse gerichtete Kräfte von der Führungsvorrichtung aufgenommen werden.

Hier ist von Vorteil, daß eine sehr effiziente Dämpfung der unerwünschten Schwingungen erfolgt. Die Schwingungen werden nämlich dadurch gedämpft, daß die Spindel sozusagen quer zu der ersten Achse noch einmal gelagert und eingespannt ist, ohne daß die Spindel zusätzliche Kräfte zum Verfahren der Dämpfungsvorrichtung aufbringen muß, wenn z.B. die oben erwähnten Anschläge vorgesehen sind.

Hier ist es besonders bevorzugt, wenn die beiden Lagerteile durch den Abstandshalter in einem Abstand zueinander gehalten sind, der etwa gleich dem halben Verfahrweg des Ständers in der ersten Achse ist.

Hier ist von Vorteil, daß auf diese Weise eine sehr günstige Dämpfung der Spindel erreicht wird. Wenn nämlich das eine Lagerteil durch den Ständer ganz nach außen gedrückt wurde, so befindet sich das andere Lagerteil etwa in der Mitte und sorgt für eine günstige Dämpfung der Spindel.

Insgesamt ist es bevorzugt, wenn das Lagerteil zumindest ein Kugellager mit zerlegbarer Innenhülse umfaßt.

Diese Maßnahme ist von Vorteil, weil ein lebensdauergeschmiertes Kugellager verwendet werden kann, das die radiale Bewegung zwischen Lagerteil und Spindel ermöglicht. Der durch die axiale Verschiebung dieser Teile auftretende Verschleiß beeinträchtigt dabei dann nur die Innenhülse, die jedoch beispielsweise an einer Freischneidung der Spindel ausgewechselt werden kann, ohne daß eine vollständige Demontage erforderlich ist.

Dabei ist es weiter bevorzugt, wenn die Innenhülse einen zweiteiligen Kunststoffinnenring aufweist.

Ein derartiger zweiteiliger Kunststoffinnenring, der beispielsweise in das Kugellager eingeklipst werden kann, ist besonders einfach an der genannten Freischneidung austauschbar. Darüberhinaus sind die Gleiteigenschaften eines derartigen Kunststoffinnenringes für die gewählten Zwecke besonders geeignet, so daß trotz der ggf. hohen Kräfte, welche von der Spindel auf den Kunststoffinnenring übertragen werden, dieser nicht heißläuft oder übermäßig abgenutzt wird.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine schematische Draufsicht auf die neue Werkzeugmaschine, wobei lediglich der X-Achsen Vortrieb mit entsprechender Dämpfungsvorrichtung gezeigt ist und der Ständer nur angedeutet wurde; und
- Fig. 2: eine Schnittdarstellung längs der Linie II-II aus Fig. 1, welche einen Teil der neuen Dämpfungsvorrichtung detaillierter zeigt.

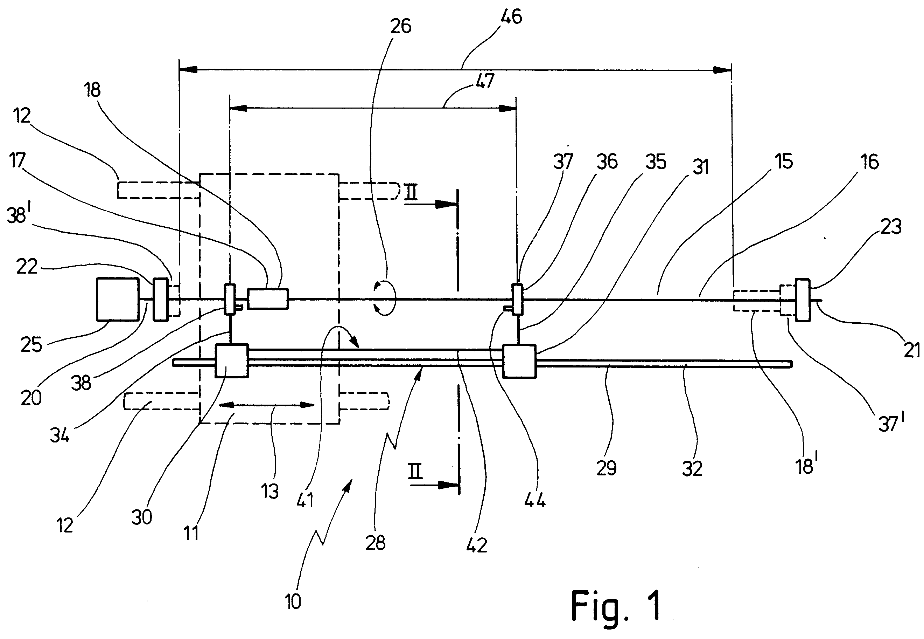

In Fig. 1 ist in stark schematisierter Darstellung eine Werkzeugmaschine 10, die in dem gezeigten Beispiel eine Langbett-Werkzeugmaschine ist, dargestellt. Die Werkzeugmaschine 10 umfaßt einen lediglich schematisch angedeuteten Ständer 11, der auf ebenfalls nur schematisch und teilweise angedeuteten Laufschienen 12 gelagert ist. Der Ständer 11 ist in einer ersten Achse 13 verfahrbar, die in dem gezeigten Ausführungsbeispiel die X-Achse der Langbett-Werkzeugmaschine ist.

Zum Verfahren des Ständers 11 in Richtung der ersten Achse 13 ist eine Spindel 15 vorgesehen, die hier eine Kugelrollspindel 16 ist. Die Kugelrollspindel 16 ist über ein Mutternteil 17 in Form einer Mutter 18 derart mit dem Ständer 11 verbunden, daß dieser sich infolge der Drehung der Spindel 15 in Richtung der ersten Achse 13 bewegt.

Die Spindel 15 ist im Bereich ihrer beiden äußeren Enden 20 und 21 an zwei Stützstellen 22 und 23 in Form von Lagerblöcken drehbar eingespannt. An dem linken äußeren Ende 20 ist die Spindel 15 ferner mit einer Antriebseinrichtung 25 verbunden, welche die Spindel 15 in eine bei 26 angedeutete Drehung versetzt.

Bei sehr hohen Drehzahlen der Spindel 15 und/oder bei einer großen eingespannten Länge zwischen den beiden Stützstellen 22 und 23 neigt die Spindel 15 dazu, durch ihr Eigengewicht angeregt in unerwünschte Schwingungen zu geraten. Diese Schwingungen können sich so aufschaukeln, daß es zu einer Zerstörung der Werkzeugmaschine 10 kommt.

Um dies zu vermeiden, ist eine allgemein mit 28 bezeichnete Dämpfungsvorrichtung vorgesehen, welche derart auf die Spindel 15 wirkt, daß etwaige Schwingungen gedämpft oder ganz verhindert werden.

Die Dämpfungsvorrichtung 28 umfaßt eine Führungsvorrichtung 29, an der zwei Führungswagen 30 und 31 in Richtung der ersten Achse 13 verschiebbar gelagert sind. Diese Verschiebbarkeit ist dadurch erreicht, daß eine parallel zu der Spindel 15 verlaufende Führungsschiene 32 vorgesehen ist, auf welcher die Wagen 30 und 31 laufen.

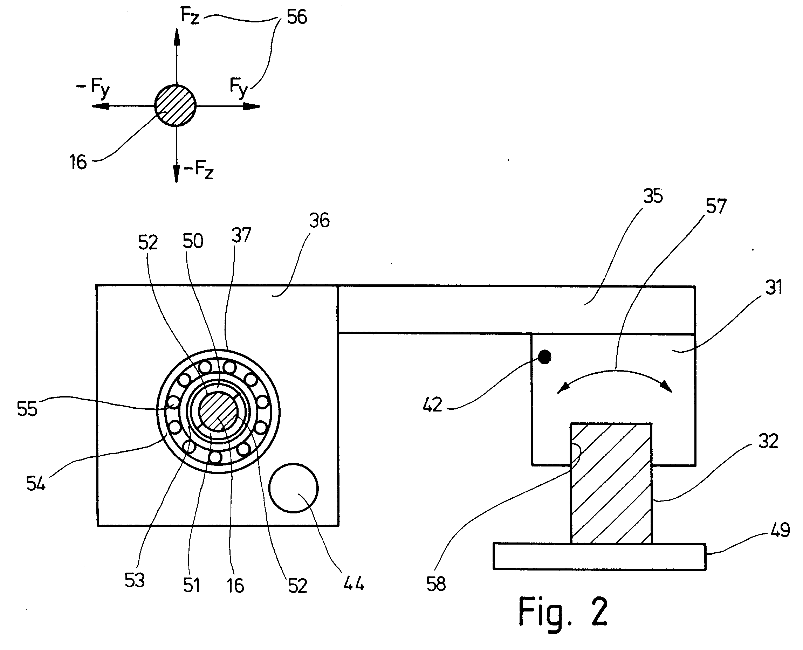

Über Ausleger 34 und 35 sind an den Wagen 30 und 31 Lagerteile 36 mit Kugellagern 37 und 38 befestigt. Die beiden Kugellager 37 und 38 sitzen zu beiden Seiten der Mutter 18 auf der Spindel 15 und umfassen diese vollständig. Wie noch anhand von Fig. 2 erläutert werden wird, sitzen die Kugellager 37 und 38 sowohl axial als auch radial verschiebbar auf der Spindel 15.

Zwischen den beiden Wagen 30 und 31 ist ein Abstandshalter 41 in Form einer Stange 42 vorgesehen. Die Stange 42 hält die beiden Wagen 30 und 31 in einem bestimmten Abstand zueinander.

Ferner sind in Fig. 1 noch Anschläge 44 zu erkennen, die an den Lagerteilen 36 vorgesehen sind und über welche die Lagerteile 36 zumindest zeitweise mit dem Mutternteil 17 in Anlage bringbar sind. Die Anordnung ist derart getroffen, daß dann, wenn sich der Spindelstock 11 in Fig. 1 nach links bewegt, das Mutternteil 17 das Kugellager 38 in Fig. 1 mit nach links schleppt. Über die Stange 42 wird dabei ebenfalls das Kugellager 37 in Fig. 1 nach links bewegt. In der in Fig. 1 äußersten linken Position liegt das Kugellager 38 in seiner bei 38' bezeichneten Position nahezu an der linken Stützstelle 22 an. Bewegt sich der Ständer 11 jetzt infolge einer entsprechenden Drehung der Spindel 15 in Fig. 1 ganz nach rechts, so kommt das Mutternteil 17 über den Anschlag 44 in Anlage mit dem Kugellager 37, das schließlich seine in Fig. 1 ganz rechte Lage bei 37' einnimmt. Die Mutter 18 ist in dieser Lage mit 18' gekennzeichnet. Der insoweit beschriebene maximale Verfahrweg des Ständers 11 ist in Fig. 1 mit 46 gekennzeichnet. Mit 47 ist in Fig. 1 der Abstand der beiden Kugellager 37, 38 in Richtung der ersten Achse 13 gekennzeichnet. Der Abstand 47 ist so gewählt, daß er etwa dem halben Verfahrweg 46 entspricht. Durch diese Anordnung ist sichergestellt, daß sich dann, wenn sich eines der Kugellager 37, 38 in einer extremen Endposition 37' oder 38' befindet, das jeweils andere Kugellager 38, 37 etwa in der Mitte der Spindel 15 angeordnet ist und dort die mögliche Schwingung der Spindel 15 effektiv dämpft.

Es sei noch bemerkt, daß die Anschläge 44 mit Puffern versehen sind, so daß es auch dann, wenn der Ständer 11 im Eilgang verfahren wird, nicht zu einer Beschädigung der Kugellager 37, 38 kommt.

Wie die Bedämpfung der Spindel 15 wirkt, wird jetzt anhand von Fig. 2 beschrieben, die eine Schnittdarstellung längs der Linie II-II aus Fig. 1 ist. Es sei noch bemerkt, daß die Darstellung in Fig. 2 zwar gegenständlicher ist, daß jedoch genauso wie in Fig.1 die Abmaße und Relationen lediglich beispielhaft und teilweise aus Gründen der Darstellung übertrieben dargestellt sind.

Fig. 2 ist zu entnehmen, daß die Führungsschiene 32 auf einem Sockel 49 befestigt ist, an dem auch die Stützstellen 22, 23 mit ihren Lagerböcken befestigt sein können. Ferner ist gezeigt, daß das Lagerteil 36 das Kugellager 37 aufnimmt. Das Kugellager 37 kann entweder in das Lagerteil 36 eingepaßt sein oder aber auf nicht gezeigte Weise mit diesem verbunden werden.

Die geschnitten dargestellte Kugelrollspindel 16 weist wie üblich ein aus Darstellungsgründen nicht gezeigtes Außengewinde auf, über das die Mutter 18 verfahren wird. Auf dem Außengewinde sitzt als Innenhülse 50 ein Kunststoffinnenring 51, der zweiteilig aus zwei Lagerschalen 52 aufgebaut ist und die Kugelrollspindel 16 umfaßt. Die Lagerschalen 52 sind eingeklipst und sitzen in einem Innenteil 53 des ansonsten kaufüblichen Kugellagers 37.

Das Kugellager 37 umfaßt ferner ein an dem Lagerteil 36 befestigtes Außenteil 54, das über Wälzkörper 55 mit dem Innenteil 53 verbunden ist. Ferner ist zu erkennen, daß der Anschlag 44 an dem Lagerteil 36 angeordnet ist.

Durch die zweiteilige Auslegung des Kunststoffinnenringes 51 kann dieser an einer Freischneidung der Kugelrollspindel 16 jederzeit ausgewechselt werden, so daß bei einem Fehler oder bei Verschleiß eine völlige Demontage in diesem Bereich der Werkzeugmaschine vermieden wird. Darüberhinaus ist das Kugellager 37 insgesamt lebensdauergeschmiert.

Während der Kunststoffinnenring 51 die axiale Verschiebung des Kugellagers 37 an der Kugelrollspindel 16 gewährleistet, ermöglicht das Kugellager 37 selbst die radiale Bewegung zwischen Kugelrollspindel 16 und Lagerteil 36. Bei der tatsächlichen Ausführung der Werkzeugmaschine 10 sitzt der Kunststoffinnenring 51 zwar axial und dadurch in gewissem Maße auch radial verschiebbar aber doch relativ fest auf dem Außengewinde, um unmittelbar Kräfte von der Spindel 15 aufnehmen zu können.

Oben links in Fig. 2 ist gezeigt, daß die Kugelrollspindel 16 Kräfte 56 über das Kugellager 37 und das Lagerteil 36 auf den Ausleger 35 derart ausübt, daß auf den Wagen 31 ein Kippmoment 57 quer zur ersten Achse 13 ausgeübt wird. Der erste Führungswagen 31 umfaßt die Führungsschiene 32 derart, daß das Kippmoment 57 von der Führungsschiene 32 aufgenommen wird.

Beliebige, von der Spindel 15 quer zur ersten Achse 13 ausgeübte Kräfte 56 lassen sich immer in zueinander senkrechte Kraftkomponenten F_{y} und F_{z} zerlegen. Beide Kraftkomponenten F_{y} und F_{z} erzeugen Teile des Kippmomentes 57. Wie bereits gesagt, umschließt der Kunststoffinnenring 51 die Spindel 15 derart, daß die Spindel in dem Kugellager 37 so gut wie kein Spiel aufweist. Auslenkungen der Spindel in z- oder y-Richtung sind daher nur möglich, wenn sich der Führungswagen 31 quer zu der ersten Achse 13 um die Führungsschiene 32 verkippen kann. Wegen der besonderen Aufnahme des Führungswagens 31 auf der Führungsschiene 32 ist dies jedoch nicht möglich. Zwar ist in Fig. 2 lediglich ein U-förmiges Umfassen der Führungsschiene 32 durch den Führungswagen 31 gezeigt, die Führungsschiene 32 kann jedoch eine entsprechend profilierte Außenkontur aufweisen, an die der Führungswagen 31 mit seinem Führungsübergriff 58 so angepaßt ist, daß das Kippmoment 57 unmittelbar in den Sockel 49 eingeleitet wird.

Derart aufeinander abgestimmte Führungsschienen 32 und Führungswagen 31 werden als Linearführungen bezeichnet und sind kommerziell verfügbar.

## Patentansprüche

1. Werkzeugmaschine, insbesondere Langbett-Werkzeugmaschine, mit einem in zumindest einer ersten Achse (13) verfahrbaren Ständer (11) und mit zumindest einer im Bereich ihrer beiden äußeren Enden (20, 21) an Stützstellen (22, 23) drehbar eingespannten Spindel (15, 16), die sich parallel zu der ersten Achse (13) erstreckt und mit dem Ständer (11) derart verbunden ist, daß der Ständer (11) bei einer Drehung (26) der Spindel (15, 16) in der ersten Achse (13) verfahren wird, und mit einer zwischen den Stützstellen (20, 21) auf die Spindel (15, 16) wirkenden Dämpfungsvorrichtung (28), die etwaige Schwingungen der Spindel (15, 16) dämpft, dadurch gekennzeichnet, daß die Dämpfungsvorrichtung (28) vom Ständer (11) unabhängig und längs der Spindel (15, 16) dadurch verfahrbar ist, daß die Dämpfungsvorrichtung (28) zumindest zeitweise über zumindest einen Anschlag (44) mit dem fahrenden Ständer (11) in Anlage bringbar ist.

2. Werkzeugmaschine nach Anspruch 1, dadurch gekennzeichnet, daß bei der die Spindel (15, 16) über ein an dem Ständer (11) befestigtes Mutternteil (17) mit dem Ständer (11) verbunden ist, wobei die Dämpfungsvorrichtung (28) zu beiden Seiten des Mutternteiles (17) auf die Spindel (15, 16) wirkt.

3. Werkzeugmaschine nach Anspruch 1 oder 2, dadurch gekennzeichnet, daß die Dämpfungsvorrichtung (28) zumindest ein die Spindel (15, 16) umfassendes Lagerteil (36) aufweist.

4. Werkzeugmaschine nach Anspruch 3, dadurch gekennzeichnet, daß das Lagerteil (36) gegenüber der Spindel (15, 16) axial und radial bewegbar ist.

5. Werkzeugmaschine nach Anspruch 3 oder 4, dadurch gekennzeichnet, daß die Dämpfungsvorrichtung (28) zumindest zwei Lagerteile (36; 37, 38) aufweist, die in Richtung der ersten Achse (13) beabstandet und durch einen Abstandshalter (41) miteinander verbunden sind.

6. Werkzeugmaschine nach einem der Ansprüche 1 bis 5, dadurch gekennzeichnet, daß die Dämpfungsvorrichtung (28) an einer parallel zu der Spindel (15, 16) verlaufenden Führungsvorrichtung (29) in Richtung der ersten Achse (13) verschiebbar geführt ist.

7. Werkzeugmaschine nach Anspruch 6, dadurch gekennzeichnet, daß die Dämpfungsvorrichtung (28) derart an der Führungsvorrichtung (29) geführt ist, daß durch die Spindel (15, 16) auf die Dämpfungsvorrichtung (28) ausgeübte, im wesentlichen quer zu der ersten Achse (13) gerichtete Kräfte (56; F_{z}, F_{y}) von der Führungsvorrichtung (29) aufgenommen werden.

8. Werkzeugmaschine nach Anspruch 5 oder nach Anspruch 5 und einem der Ansprüche 6 oder 7, dadurch gekennzeichnet, daß die beiden Lagerteile (36; 37, 38) durch den Abstandshalter (41) in einem Abstand (47) zueinander gehalten sind, der etwa gleich dem halben Verfahrweg (46) des Ständers (11) in der ersten Achse (13) ist.

9. Werkzeugmaschine nach einem der Ansprüche 3 bis 8, dadurch gekennzeichnet, daß das Lagerteil (36) zumindest ein Kugellager (37, 38) mit zerlegbarer Innenhülse (50) umfaßt.

10. Werkzeugmaschine nach Anspruch 9, dadurch gekennzeichnet, daß die Innenhülse (50) einen zweiteiligen Kunststoffinnenring (51) aufweist.

## Claims

1. Machine tool, in particular a long-bed machine tool, having a column (11) that is displaceable at least in a first axis (13), and at least one spindle (15, 16) that is rotatably clamped at support points (22, 23) in the region of its two external ends (20, 21), and that extends parallel to said first axis (13) and is connected to said column (11) such that upon rotation (26) of said spindle (15, 16) the column (11) is displaced in the first axis (13), and a damping mechanism (28) acting on said spindle (15, 16) between said support points (20, 21) for damping possible vibrations of said spindle (15, 16), characterized in that the damping mechanism (28) is independent from said column (11) and is displaced along said spindle (15, 16) in that said damping mechanism (28) can be brought at least temporarily in bearing contact with the moving column (11) by means of at least one stop (44).

2. The machine tool of claim 1, characterized in that the spindle (15, 16) is connected to the column (11) by means of a nut element (17) that is fastened onto the column (11), whereby the damping mechanism (28) acts on the spindle (15, 16) on both sides of the nut element (17).

3. The machine tool of claim 1 or 2, characterized in that the damping mechanism (28) comprises at least one bearing element (26) that encircles the spindle (15, 16).

4. The machine tool of claim 3, characterized in that the bearing element (36) is axially and radially movable with respect to the spindle (15, 16).

5. The machine tool of claim 3 or 4, characterized in that the damping mechanism (28) comprises at least two bearing elements (36; 37, 38) that are spaced apart in the direction of the first axis and joined to one another by a spacer element (41).

6. The machine tool of any of claims 1 through 5, characterized in that the damping mechanism (28) is guided displaceably along the first axis (13), on a guide apparatus (29) running parallel to the spindle (15, 16).

7. The machine tool of claim 6, characterized in that the damping mechanism is guided on the guide apparatus (29) such that forces (56; F_{z}, F_{y}) exerted by the spindle (15, 16) on the damping mechanism (28) and oriented substantially transverse to the first axis (13) are absorbed by the guide apparatus (29).

8. The machine tool of claim 5 or of claim 5 and any of claims 6 or 7, characterized in that the two bearing elements (36; 37, 38) are held by the spacer element (41) at a distance (47) from one another that is approximately equal to half the displacement distance (46) of the column (11) in the first axis (13).

9. The machine tool of any of claims 3 through 8, characterized in that the bearing element (36) comprises at least one ball bearing (37, 38) with a decomposable inner sleeve (50).

10. The machine tool of claim 9, characterized in that the inner sleeve (50) comprises a two-part plastic inner ring (51).

## Revendications

1. Machine-outil, en particulier machine-outil à banc long, comportant un montant (11) déplaçable dans au moins un premier axe (13) et comportant au moins une broche (15, 16) montée tournante sur des points d'appui (22, 23), dans la zone de ses deux extrémités extérieures (20, 21), qui est parallèle au premier axe (13) et reliée au montant (11) de manière que le montant (11) soit déplacé dans le premier axe (13), lors d'une rotation (26) de la broche (15, 16), et comportant un dispositif d'amortissement (28) agissant entre les points d'appui (20, 21) sur la broche (15, 16), qui amortit d'éventuelles oscillations de la broche (15, 16), caractérisée en ce que le dispositif d'amortissement (28) est déplaçable indépendamment du montant (11) et le long de la broche (15, 16), de manière que le dispositif d'amortissement (28) puisse être amené en application avec le montant (11) mobile, au moins temporairement, par au moins une butée (44).

2. Machine-outil selon la revendication 1, caractérisée en ce que la broche (15, 16) est reliée au montant (11), par un élément d'écrou (17), fixé sur le montant (11), le dispositif d'amortissement (28) agissant sur la broche (15, 16), des deux côtés de l'élément d'écrou (17).

3. Machine-outil selon la revendication 1 ou 2, caractérisée en ce que le dispositif d'amortissement (28) présente au moins un élément de palier (36), entourant la broche (15, 16).

4. Machine-outil selon la revendication 3, caractérisée en ce que l'élément de palier (36) est déplaçable axialement et radialement par rapport à la broche (15, 16).

5. Machine-outil selon le revendication 3 ou 4, caractérisée en ce que le dispositif d'amortissement (28) comporte au moins deux éléments de palier (36 : 37, 38), qui sont espacés dans la direction du premier axe (13) et reliés entre eux par un écarteur (41).

6. Machine-outil selon l'une des revendications 1 à 5, caractérisée en ce que le dispositif d'amortissement (28) est guidé de manière à pouvoir coulisser sur un dispositif de guidage (29), s'étendant parallèlement à la broche (15, 16), en direction du premier axe (13).

7. Machine-outil selon la revendication 6, caractérisée en ce que le dispositif d'amortissement (28) est guidé sur le dispositif de guidage (29), de manière que des forces (56 ; F_{z}, F_{y}), essentiellement dirigées transversalement au premier axe (13), exercées par la broche (15, 16) sur le dispositif d'amortissement (28), soient absorbées par le dispositif de guidage (29).

8. Machine-outil selon la revendication 5, ou selon la revendication 5 et l'une des revendications 6 ou 7, caractérisée en ce que les deux éléments de palier (36 ; 37, 38) sont maintenus par l'écarteur (41) à une distance (47) l'un de l'autre, qui est à peu près égale à la moitié de la course (46) du montant (11) dans le premier axe (13).

9. Machine-outil selon l'une des revendications 3 à 8, caractérisée en ce que l'élément de palier (36) comprend au moins un roulement à billes (37, 38) avec douille intérieure (50) démontable.

10. Machine-outil selon la revendication 9, caractérisée en ce que la douille intérieure (50) présente un anneau intérieur en matière plastique (51) en deux parties.
